# FASCICULE DE BREVET EUROPEEN

(11) **EP 2 050 251 B1**
(45) Date de publication et mention de la délivrance du brevet: **10.10.2018**
(21) Numéro de dépôt: 07823703.9
(22) Date de dépôt: 08.08.2007
(51) Int. Cl.: H04L 29/08, H04L 29/06

(54) **PROCEDE DE DIFFUSION D'INFORMATIONS DANS UN RESEAU DISTRIBUE**
VERFAHREN ZUR VERBREITUNG VON INFORMATIONEN IN EINEM VERTEILTEN NETZWERK
METHOD FOR THE DIFFUSION OF INFORMATION IN A DISTRIBUTED NETWORK

(30) Priorité: 10.08.2006 FR 0653349
(43) Date de publication de la demande: 22.04.2009
(73) Titulaire: Thomson Licensing, 92130 Issy-les-Moulineaux (FR)
(72) Inventeur: ROUSSEL, Joris, F-75012 Paris (FR); MOREAU, Clément, F-75015 Paris (FR)
(74) Mandataire: Vidon Brevets & Stratégie
(86) Numéro de dépôt international: PCT/FR2007/051798
(87) Numéro de publication internationale: WO 2008/017792

(56) Documents cités:
- WO-A1-03/088065
- US-A1- 2003 217 172
- US-B1- 7 047 315

## Description

### Domaine de l'invention

La présente invention se rapporte au domaine des Technologies de l'Information et de la Communication.

La présente invention se rapporte plus particulièrement à un procédé de diffusion d'informations dans un réseau distribué.

### Etat de la technique

On connaît dans l'art antérieur les techniques de diffusion d'informations (*broadcasting*). Cette diffusion effectuée de manière régulière (pratiquement en temps réel) est traditionnellement réalisée d'une des façons suivantes : par broadcast (ou sa variante multicast) ou par unicast.

Les procédés de broadcast consistent en l'envoi d'informations une seule fois pour tous les postes clients qui « écoutent » ces informations. Cette technique est très efficace du côté serveur. Toutefois, cette technique présente deux inconvénients importants :
- il est nécessaire d'avoir une infrastructure de réseau adaptée ;
- cette technique est très consommatrice en terme de bande passante si de multiples flux d'informations doivent être diffusés en même temps.

La technique du multicast est une variante du mécanisme de broadcast dans lequel celui qui écoute un flux spécifique de données s'enregistre auprès de l'infrastructure de réseau et des serveurs. Grâce à ce processus d'enregistrement, le réseau est capable de ne pas diffuser un flux d'informations spécifique dans les parties du réseau où aucun dispositif « écouteur » n'est intéressé par ce flux. Ce mécanisme permet d'économiser de la bande passante dans le réseau d'accès, c'est-à-dire la partie du réseau entre l'utilisateur final et la partie coeur de réseau. Les inconvénients de tels procédés sont les suivants :
- ils sont basés sur les capacités de la couche basse à traiter le multicast, qui n'est pas très bien déployé dans les réseaux actuels ;
- ils ne permettent pas de réduire la bande passante dans la partie coeur de réseau.

La technique de l'unicast consiste en l'envoi d'informations de manière individuelle depuis le serveur vers chaque poste écouteur. Cette technique peut être utilisée en mode « push » (les informations sont poussées par le serveur vers les utilisateurs finaux), de façon très similaire aux procédés de broadcast, ou bien en mode « pull » (le dispositif de l'utilisateur extrait des informations du serveur). La variante « pull » est très déployée aujourd'hui, en particulier à travers les protocoles Web et les serveurs Web. L'inconvénient majeur de la technique unicast est qu'elle est très consommatrice de ressources pour le serveur. De plus, il est difficile d'étendre cette technique à un réseau de grande dimension constitué de dispositifs similaires.

L'art antérieur connaît les technologies RSS (*Really Simple Syndication*) ou Atom, qui sont des techniques d'unicast en mode pull. Dans le cadre de ces deux technologies, un terminal interroge régulièrement un serveur et donne l'illusion vis-à-vis de l'utilisateur que les informations sont envoyées vers le terminal. Le problème qui se pose est la surcharge du réseau, en terme de bande passante.

Il est aujourd'hui possible de transmettre des informations sur un combiné (terminal) DECT (*Digital Enhanced Cordless Telecommunications*)*.* On cherche à utiliser des ressources partagées entre plusieurs utilisateurs. Le problème central qui se pose est de savoir comment distribuer des informations sans surcharger le réseau.

L'art antérieur connaît, par le brevet américain US 7 047 315 (Cisco Technology), un procédé pour router des données à travers un ou plusieurs routeurs de partage de charge vers un serveur sélectionné, dont la charge est partagée, parmi une pluralité de serveurs dans un réseau.

L'art antérieur connaît également, par la demande de brevet américain US 2003/217172 (Intel), une méthode pour transmettre un partage de charge dans des environnements à vitesses variées.

Le document WO 03/088065 A1 daté du 23 octobre 2003 décrit un réseau pour distribuer du contenu, ce réseau comportant des serveurs en bordure de réseau qui délivrent du contenu aux clients de la part de fournisseurs de contenu. Une requête d'un client n'est transmise au serveur d'origine que si cette requête ne peut être traitée par un noeud intermédiaire du réseau.

### Exposé de l'invention

La présente invention est définie dans les revendications énoncées ci-après.

Dans le cadre de la présente invention, différents équipements de clients finaux communiquent entre eux pour créer dynamiquement un réseau d'équipements hiérarchisé qui permet de faire circuler des informations de manière descendante (depuis un serveur principal vers tous les utilisateurs).

La présente invention diffère des solutions des documents de l'art antérieur US 7 047 315 et US 2003/217172 en ce que :
- la présente invention se rapporte à des « équipements finaux » et non à des serveurs dédiés ;
- le réseau dans le cadre de la présente invention est dynamiquement créé, démonté et réparé ;
- les informations, dans le cadre de la présente invention, ne sont diffusées qu'à des noeuds intéressés par celles-ci : seuls les noeuds intéressés par un flux d'information particulier participent à la hiérarchie liée à ce flux.

La présente invention entend remédier aux inconvénients de l'art antérieur en proposant un mécanisme de diffusion d'informations pratiquement en temps réel dans un réseau de grande dimension. Il est entendu que le flux d'informations se dirige d'un serveur de contenu vers un poste client (un PC ou un autre type de dispositif de réseau). Un des buts de la présente invention est de faciliter la diffusion d'informations.

A cet effet, la présente invention concerne, dans son acception la plus générale, un terminal de communication (T1) apte à se connecter dans un réseau à d'autres terminaux de communications (T2, T3) et à un serveur et apte à recevoir et transmettre des flux de données, caractérisé en ce qu'il comporte des moyens pour établir des liens hiérarchiques de type « père/fils » avec d'autre terminaux de communication ou avec un serveur, ces liens hiérarchiques étant établis de façon dynamique sur la base de la charge dudit terminal (T1) et des terminaux connectés à lui (T2, T3) directement ou indirectement ainsi que sur la base de la charge dudit serveur.

De préférence, ledit terminal de communication comporte des moyens pour établir, dans le cadre des liens hiérarchiques, une arborescence par flux de données.

La présente invention se rapporte également à un procédé d'association entre un poste client et un serveur central ou entre un poste client et un autre poste client/serveur dans un réseau de communication hiérarchique comportant au moins un serveur central et une pluralité de postes clients, certains des postes clients étant également serveurs et « pères », et d'autres « fils » dans ledit réseau, caractérisé en ce qu'il comporte les étapes suivantes :
a) Une étape de demande, de la part d'un poste client qui souhaite recevoir un flux donné, d'association auprès dudit serveur central :
b) Une étape de sélection par le serveur central entre les deux possibilités suivantes :
   i) donner l'accès audit flux sur le serveur central audit poste client effectuant la demande d'association (l'association est alors terminée) ; ou bien :
   ii) rediriger la demande d'association vers un de ses fils abonnés au flux ;
c) Dans le cas b)ii) une autre étape de sélection par le poste client/serveur fils entre les deux possibilités suivantes :
   i) donner l'accès audit flux sur le poste client/ serveur audit poste client effectuant la demande d'association (l'association est alors terminée) ; ou bien :
   ii) rediriger la demande d'association vers un de ses fils abonnés au flux ;
le procédé étant en outre caractérisé en ce que l'étape c) est itérée jusqu'à ce que l'association soit terminée.

De préférence, à l'étape b)ii), le poste client/serveur fils vers lequel la demande d'association est redirigée, est choisi de façon aléatoire.

Avantageusement, à l'étape c)ii), le poste client/serveur fils vers lequel la demande d'association est redirigée, est choisi de façon aléatoire.

Enfin, la présente invention se rapporte également à un réseau de communication pour la diffusion de contenu multimédia depuis un serveur de contenu public vers un serveur privé central et une pluralité de postes clients reliés logiquement audit serveur privé et entre eux par un sous-réseau de communication, caractérisé en ce que ledit sous-réseau est distribué, possède une structure hiérarchique et est construit de façon dynamique sur la base de la charge au niveau du serveur et des postes clients.

De préférence, le contenu multimédia est diffusé en mode « push ».

Selon un mode de mise en oeuvre, ledit contenu multimédia est composé d'une pluralité de flux d'informations et, pour établir ladite structure hiérarchique du sous-réseau, une arborescence par flux est construite.

Dans le cadre de ladite structure hiérarchique du réseau, des postes clients sont « pères » et d'autres « fils ». Ces notions sont utilisées ici dans leur sens classique en informatique.

Dans un mode de réalisation, les postes clients sont des ordinateurs de type PC.

Dans un autre mode de réalisation, les postes clients sont des terminaux réseaux, éventuellement de téléphonie, par exemple compatibles DECT.

Avantageusement, en cas de défaillance d'un poste client, ses fils ont la possibilité de se reconnecter audit serveur privé central, ou bien au père du poste défaillant.

### Brève description des dessins

On comprendra mieux l'invention à l'aide de la description, faite ci-après à titre purement explicatif, d'un mode de réalisation de l'invention, en référence aux figures annexées, dans lesquelles :
- la Figure 1 illustre l'architecture d'un réseau distribué à un flux selon la présente invention ;
- la Figure 2 représente un processus d'association à un serveur pour un flux donné ;
- les Figure 3a et 3b illustrent des exemples de processus d'association sans et avec intervention d'un serveur fils ; et
- la Figure 4 illustre l'architecture d'un réseau distribué à deux flux selon la présente invention.

### Description détaillée des modes de réalisation de l'invention

On se sert des terminaux déployés comme une architecture peer-to-peer (poste à poste). On construit un réseau hiérarchique de pairs qui sont abonnés à un même flux d'informations.

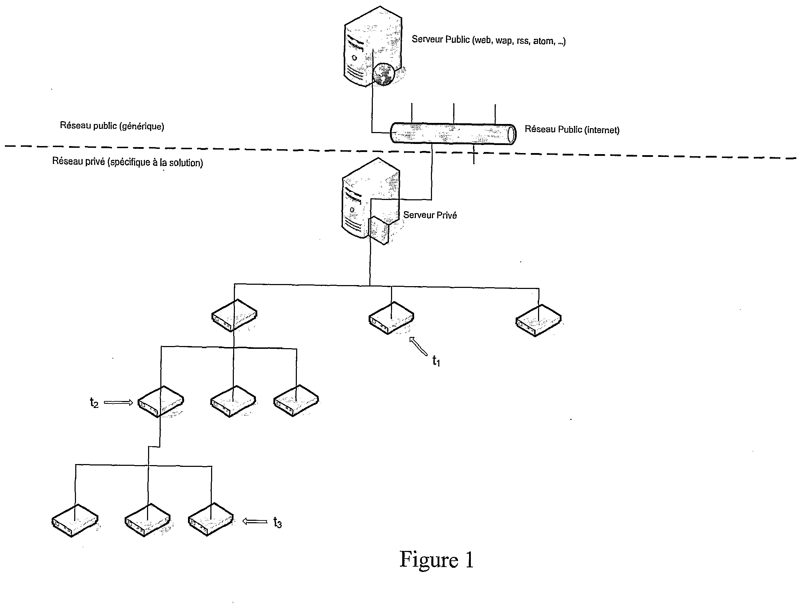

La Figure 1 illustre l'architecture d'un réseau distribué à un flux selon la présente invention. Une structure arborescente avec des pères et des fils est établie. Il n'y a plus de notion de file d'attente. Le mode « push » est de préférence utilisée et une architecture par flux (ex. météo, *« news »,* cours de bourse etc.) est établie : chaque flux d'information construit sa structure arborescente. Ce réseau se constitue de tous les abonnés (pères et fils) pour ce même flux.

Les informations sont extraites d'un serveur public par un serveur proxy privé, avant d'être redistribuées à tout le réseau de postes clients (par exemples ceux notés t₁, t₂ et t₃ sur la Figure 1) intéressés par ce flux d'informations spécifique.

Les informations peuvent être diffusées en mode push ou en mode pull dans le réseau hiérarchique.

Dans les deux modes, le serveur proxy diffuse l'information à ses fils directs qui eux-mêmes la diffuseront à leurs fils éventuels. Ce mécanisme récursif permet de diffuser l'information à tous les noeuds du réseau.

La structure d'arbre est construite de façon dynamique sur la base d'un flux. Chaque dispositif d'utilisateur final souhaitant s'abonner à un flux spécifique contacte le serveur privé central pour ce flux. Ensuite, il est soit directement attaché au serveur, soit redirigé vers un des fils du serveur central. De façon dynamique, les fils ont la possibilité de rediriger une connexion entrante à l'un de leurs propres fils, créant ainsi une structure hiérarchique.

Le réseau hiérarchique est construit de façon dynamique sur la base de la charge au niveau du serveur et des postes clients.

La charge peut être définie comme le nombre de fils connectés. Par exemple, si on définit la charge limite à 5 connexions, les 5 premiers fils qui se connecteront sur le serveur privé ou un client donné se verront accepter leur demande d'association. Les fils suivants seront redirigés par leur père (serveur privé ou client) vers un des fils de ce dernier.

D'une façon plus élaborée, la charge pourra être fonction à la fois du nombre de fils et du volume d'informations à distribuer.

Par exemple, pour un volume d'information de 50ko, le serveur/client pourra limiter le nombre de connexion de fils à 10 et pour un volume de 100ko, limiter alors ce nombre à 5.

D'une manière générale, cette définition de la charge maximale peut-être différente entre le serveur et les clients. Le serveur pourra accepter par exemple 100 fils et les clients n'en accepter que 20.

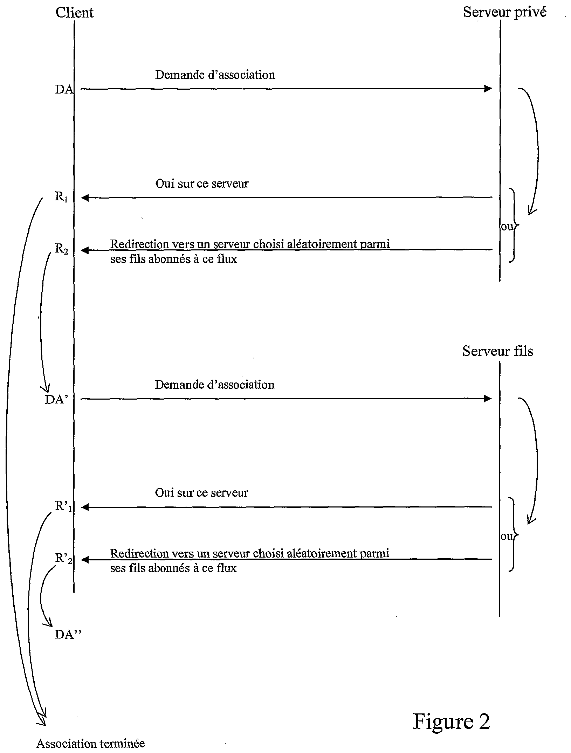

La Figure 2 représente le processus d'association à un serveur pour un flux donné. Un poste client, qui souhaite recevoir le flux, effectue une demande d'association (DA sur la Figure 2) auprès du serveur privé central. Ce dernier a alors deux possibilités :
- lui donner l'accès audit flux sur le serveur privé central (réponse R₁ sur la Figure 2) et l'association est terminée ; ou bien :
- rediriger la demande d'association vers un de ses fils abonnés au flux (réponse R₂ sur la Figure 2), ce serveur fils étant choisi de façon aléatoire. Cette nouvelle demande d'association est notée DA' sur la Figure 2.
Ensuite, le serveur fils possède deux choix :
- lui donner l'accès audit flux (réponse R'₁ sur la Figure 2) et l'association est terminée ; ou bien :
- rediriger la demande d'association vers un de ses fils abonnés au flux (réponse R'₂ sur la Figure 2), ce serveur fils étant choisi de façon aléatoire. Cette nouvelle demande d'association est notée DA'' sur la Figure 2.

Ce processus est itéré jusqu'à ce qu'un serveur accepte de donner l'accès audit flux.

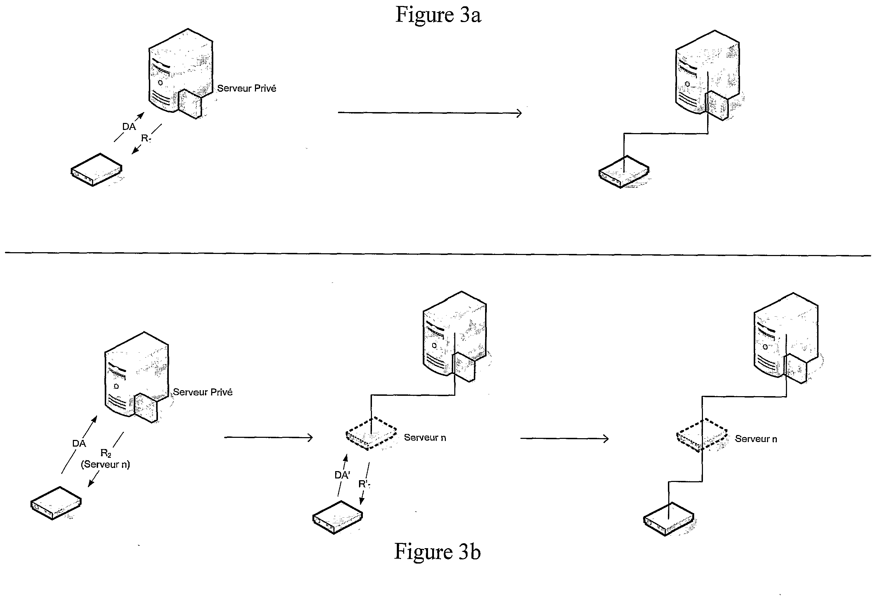

Les Figures 3a et 3b illustrent un exemple de processus d'association sans (Figure 3a) puis avec intervention d'un serveur fils (Figure 3b).

Dans la Figure 3a, un poste client demande l'accès à un flux au serveur privé central (demande d'association DA). Ce dernier n'est pas surchargé et lui donne l'accès au flux (réponse R₁).

Dans la Figure 3b, un poste client demande l'accès à un flux au serveur privé central (demande d'association DA). Ce dernier redirige cette requête vers un de ses fils (réponse R₂) et une association est établie entre le poste client qui demande un flux et le serveur fils (demande d'association DA' et réponse R'₁).

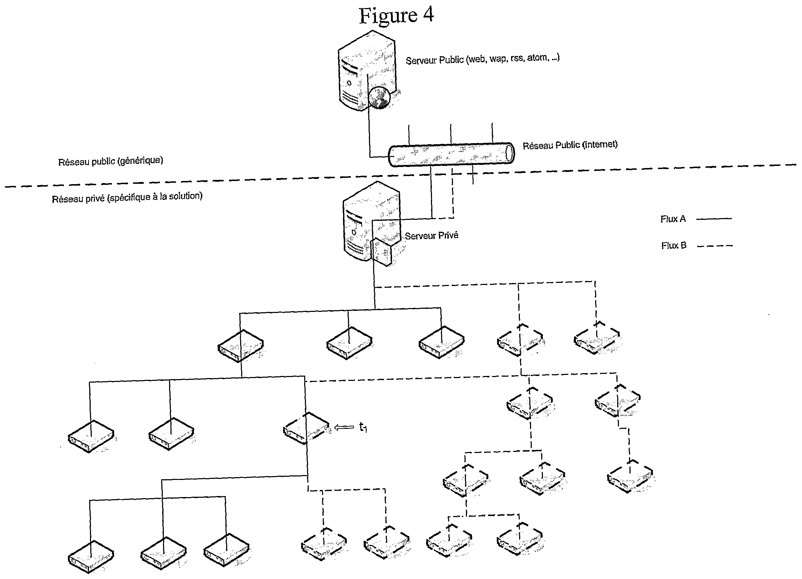

La Figure 4 illustre l'architecture d'un réseau distribué à deux flux selon la présente invention. Le flux A est représenté en traits pleins et le flux B est représenté en pointillés. On remarquera qu'un serveur fils (noté t₁ sur la Figure 4) reçoit les deux flux.

En cas de défaillance d'un poste particulier, les fils du poste défaillant ont la possibilité de se reconnecter au serveur central, ou bien au père du poste défaillant.

De plus, ce système est robuste : il y a une fonction "d'élection de nouveau chef" en cas de rupture d'un lien.

Ce mécanisme d'élection de nouveau chef garantit que lorsqu'un client disparaît de l'architecture, l'arborescence de fils qui étaient connectés à lui n'est pas détruite. Le premier fils à constater l'absence du père contacte le serveur privé pour obtenir les coordonnées d'un nouveau père potentiel et informe alors ses fils voisins du nouveau chef.

Le mécanisme selon la présente invention, implémenté de façon logicielle, peut être embarqué sur les terminaux actuels sans modification du matériel.

Le réseau de communication selon la présente invention présente de nombreux avantages :
- la charge moyenne sur le serveur central est maintenue à un niveau faible ;
- la bande passante du réseau est gérée de manière efficace, en particulier dans le cas de nombreux flux multiples ; et
- les flux d'information sont pratiquement temps réel, au moyen du mécanisme « push » d'informations.

L'invention est décrite dans ce qui précède à titre d'exemple. Il est entendu que l'homme du métier est à même de réaliser différentes variantes de l'invention sans pour autant sortir du cadre du brevet.

## Revendications

1. Terminal de communication (TI) final comportant des moyens pour :
établir des connexions avec un serveur central et avec d'autres terminaux de communication finaux qui sont abonnés a un flux de données auquel le terminal souhaite accéder ;
recevoir ledit flux de données comme un client du serveur central ou comme un client d'un des autres terminaux qui sont abonnés audit flux de données ;
transmettre, comme serveur, ledit flux vers au moins une des autres terminaux qui sont abonnées audit flux de données **caractérisé en ce que** lesdites connexions établissant un réseau de distribution de flux de données hiérarchisé et par flux de données en fonction de la souscription de terminaux audit flux de données, les connexions étant établies de façon dynamique par lesdits moyens sur la base de la charge dudit terminal, sur la base de la charge desdits autres terminaux qui sont abonnées audit flux de données, ainsi que sur la base de la charge dudit serveur central.

2. Terminal de communication final selon la revendication 1, dans lequel la charge étant un nombre de connexions pour transmettre comme serveur ledit flux vers au moins une des autres terminaux qui sont abonnées audit flux de données.

3. Terminal de communication final selon la revendication 2, dans lequel la charge étant en plus en fonction d'un volume d'information à distribuer.

4. Procédé de diffusion de données mis en oeuvre par un terminal de communication final, caractérisé en ce le procédé comporte les étapes suivantes :
établir des connexions avec un serveur central et avec d'autres terminaux de communication finaux qui sont abonnés a un flux de données auquel le terminal souhaite accéder ;
recevoir ledit flux de données comme un client du serveur central ou comme un client d'une des autres terminaux qui sont abonnés audit flux de données ;
transmettre, comme un serveur, ledit flux vers au moins une des autres terminaux qui sont abonnés audit flux de données **caractérisé en ce que** lesdites connexions établissant un réseau de distribution de flux de données hiérarchisé et par flux de données en fonction de la souscription de terminaux audit flux de données, les connexions étant établies de façon dynamique par lesdits moyens sur la base de la charge dudit terminal, sur la base de la charge desdits autres terminaux qui sont abonnés audit flux de données, ainsi que sur la base de la charge dudit serveur central.

5. Un procédé de diffusion de données selon la revendication 4, dans lequel la charge étant un nombre de connexions pour transmettre comme un serveur ledit flux vers au moins une des autres terminaux qui sont abonnées audit flux de données.

6. Un procédé de diffusion de données selon la revendication 5, dans lequel la charge étant en plus en fonction d'un volume d'information à distribuer.

## Patentansprüche

1. Kommunikationsendgerät (TI), das Mittel umfasst für:
die Herstellung von Verbindungen mit einem zentralen Server und mit anderen Kommunikationsendgeräten, die einen Datenstrom abonniert haben, auf welchen das Endgerät zugreifen möchte;
das Empfangen des besagten Datenstroms als ein Client des zentralen Servers oder als ein Client eines der anderen Endgeräte, die den besagten Datenstrom abonniert haben;
die Übertragung, als Server, des besagten Stroms an mindestens eines der anderen Endgeräte, die den besagten Datenstrom abonniert haben, **dadurch gekennzeichnet, dass** die besagten Verbindungen, die ein hierarchisiertes Verteilernetzwerk von Datenströmen aufbauen, und mittels Datenstrom in Abhängigkeit von der Subskription von Endgeräten von dem besagten Datenstrom, die Verbindungen dynamisch durch die besagten Mittel hergestellt werden, anhand der Belastung des besagten Endgeräts, anhand der Belastung der besagten anderen Endgeräte, die den besagten Datenstrom abonniert haben, sowie anhand der Belastung des besagten zentralen Servers.

2. Kommunikationsendgerät nach Anspruch 1, in welchem die Belastung eine Anzahl von Verbindungen ist, um als Server den besagten Strom an mindestens eines der anderen Endgeräte, die den besagten Datenstrom abonniert haben, zu übertragen.

3. Kommunikationsendgerät nach Anspruch 2, in welchem die Belastung darüber hinaus von einer zu verteilenden Informationsmenge abhängig ist.

4. Verfahren zur Verteilung von Daten, umgesetzt durch ein Kommunikationsendgerät, **dadurch gekennzeichnet, dass** das Verfahren die folgenden Schritte umfasst:
Herstellung der Verbindungen zu einem zentralen Server und zu anderen Kommunikationsendgeräten, die einen Datenstrom abonniert haben, auf den das Endgerät zugreifen möchte;
Empfang des besagten Datenstroms als ein Client des zentralen Servers oder als ein Client eines der anderen Endgeräte, die den besagten Datenstrom abonniert haben;
Übertragung, als ein Server, des besagten Stroms an mindestens eines der anderen Endgeräte, die den besagten Datenstrom abonniert haben, **dadurch gekennzeichnet, dass** die besagten Verbindungen, die ein hierarchisiertes Netz zur Verteilung von Datenströmen aufbauen, und mittels Datenstrom in Abhängigkeit von der Subskription von Endgeräten von dem besagten Datenstrom, die Verbindungen dynamisch durch die besagten Mittel hergestellt werden, anhand der Belastung des besagten Endgerätes, anhand der Belastung der besagten anderen Endgeräte, die den besagten Datenstrom abonniert haben, sowie anhand der Belastung des besagten zentralen Servers.

5. Verfahren zur Verteilung von Daten nach Anspruch 4, in welchem die Belastung eine Anzahl von Verbindungen ist, um als ein Server den besagten Strom an mindestens eines der anderen Endgeräte, die den besagten Datenstrom abonniert haben, zu übertragen.

6. Verfahren zur Verteilung von Daten nach Anspruch 5, in welchem die Belastung darüber hinaus von einer zu verteilenden Informationsmenge abhängig ist.

## Claims

1. Final communication terminal (TI) comprising means for:
setting up connections with a central server and with other final communication terminals that are subscribed to a data stream to which the terminal wants access,
receiving said data stream as a client of the central server or as a client of one of the other terminals that are subscribed to said data stream,
transmitting, as a server, said flow to at least one of the other terminals that have subscribed to said data stream **characterised in that** said connections set up a hierarchical data stream distribution network and by data stream according to the subscription of terminals to said data stream, the connections being set up dynamically by said means on the basis of the load of said terminal, on the basis of the load of said other terminals that are subscribed to said data stream, as well as on the basis of the load of said central server.

2. Final communication terminal according to claim 1, wherein the load being a number of connections to transmit as server said stream to at least one of the other terminals that are subscribed to said data stream.

3. Final communication terminal according to claim 2, wherein the load also being according to a volume of information to distribute.

4. Data distribution method implemented by a final communication terminal, **characterised in that** the method comprises the following steps:
setting up connections with a central server and with other final communication terminals that are subscribed to a data stream to which the terminal wants access,
receiving said data stream as a client of the central server or as a client of one of the other terminals that are subscribed to said data stream,
transmitting, as a server, said flow to at least one of the other terminals that have subscribed to said data stream **characterised in that** said connections set up a hierarchical data stream distribution network and by data stream according to the subscription of terminals to said data stream, the connections being set up dynamically by said means on the basis of the load of said terminal, on the basis of the load of said other terminals that are subscribed to said data stream, as well as on the basis of the load of said central server.

5. A method for distributing data according to claim 4, wherein the load being a number of connections to transmit as a server said stream to at least one of the other terminals that are subscribed to said data stream.

6. A method for distributing data according to claim 5, wherein the load also being according to an information volume to distribute.
